# EUROPEAN PATENT APPLICATION

(11) **EP 3 382 969 A1**
(43) Date of publication of application: **03.10.2018**
(21) Application number: 17164268.9
(22) Date of filing: 31.03.2017
(51) Int. Cl.: H04L 25/49

(54) **MODULATION CIRCUIT AND APPARATUS, DEMODULATION CIRCUIT AND APPARATUS, TRANSMITTER, RECEIVER, SYSTEM, RADIO FREQUENCY CIRCUIT, MOBILE TERMINAL, METHODS AND COMPUTER PROGRAMS FOR MODULATING AND DEMODULATING**

(71) Applicant: Intel IP Corporation, Santa Clara, CA 95054 (US)
(72) Inventor: Banin, Rotem, Even-Yehuda 4053221 (IL); Degani, Ofir, 2280100 Nes-Ammim (IL); Fayneh, Eyal, 53220 Givatyim HA (IL); Gernizky, Ronen, 34521 Haifa, HA (IL)
(74) Representative: 2SPL Patentanwälte PartG mbB

(57) **Abstract**

Examples provide a modulation circuit and apparatus, a demodulation circuit and apparatus, a transmitter, a receiver, a system, a radio frequency circuit, a mobile terminal, and methods and computer programs for modulating and demodulating. The modulation circuit (10) is configured to provide a modulated clock signal. The modulation circuit (10) comprises one or more interfaces (12) configured to receive input data, and a generator (14) configured to generate the modulated clock signal based on the input data, wherein a time between two signal edges of the clock signal depends on the input data. The one or more interfaces (12) are further configured to provide the modulated clock signal.

## Description

### Field

Examples relate to a modulation circuit and apparatus, a demodulation circuit and apparatus, a transmitter, a receiver, a system, a radio frequency circuit, a mobile terminal, and methods and computer programs for modulating and demodulating, and in particular, but not exclusively, to a concept to transfer and receive multiple data bits per sample on a single line by time encoding, also referred to a asynchronous communication.

### Background

With the growing demand for wireless services, Radio Frequency (RF) circuits become more and more versatile. For example, the number of wireless access technologies and the frequency range in which mobile communication systems are active are growing, wherein a physical size and power consumption of RF units is decreasing. For example, 5^{th} Generation (5G) systems may operate using mm-wave technology, e.g. the U.S. Federal Communications Commission (FCC) approved spectrum for 5G, including the 28, 37, and 39GHz bands. With the growing data rates also inter-component or inter-chip data rates are increasing. Digital interconnect data rates are constantly increasing and demanding higher and higher throughput. At the same time a low latency should be maintained. In many cases there are bottle necks at interfaces that connect different blocks because of throughput limitations.

Common techniques to increase throughput are adding more and more bits to the bus (or lanes in case of serial interfaces) and increasing the clock frequency of an interface, both of which may come at the price of increased power consumption for higher throughput, where according to Shannon's law signal energy would need to be increased in favor of a higher throughput (higher Signal-to-Noise-Ratio (SNR)).

Some interconnect interfaces use a few voltage levels (to gain from Shannon's law) but may be limited by the SNR and the reduction in operating voltage.

Further information can be found in Mostafa Rashdan et al, "Differential Time Signaling Data-Link Architecture", springerlink.com, Feb 2012, US2015049840 A1 and US2015036767 A1.

### Brief description of the Figures

Some examples of apparatuses, methods and/or computer programs will be described in the following by way of example only, and with reference to the accompanying figures, in which
Fig. 1 illustrates examples of a modulation circuit, a demodulation circuit, a transmitter, a receiver and a system;
Fig. 2 illustrates a duty-cycle modulated or data encoded clock signal in an example;
Fig. 3 illustrates a spectrum of a duty-cycle modulated or data encoded clock signal;
Fig. 4 illustrates a pulse width modulated or data encoded clock signal in an example;
Fig. 5 illustrates a spectrum of a pulse width modulated or data encoded clock signal;
Fig. 6 shows a block diagram of another example system;
Fig. 7 shows an implementation of a time-to-digital converter in an example;
Fig. 8 depicts examples of a transmitter, a receiver, a system, a radio transceiver, a mobile terminal, a base station transceiver and a mobile communication system;
Fig. 9 depicts a block diagram of an example of a method for providing a modulated clock signal; and
Fig. 10 depicts a block diagram of an example of a method for demodulating a modulated clock signal.

### Detailed Description

Various examples will now be described more fully with reference to the accompanying drawings in which some examples are illustrated. In the figures, the thicknesses of lines, layers and/or regions may be exaggerated for clarity.

Accordingly, while further examples are capable of various modifications and alternative forms, some particular examples thereof are shown in the figures and will subsequently be described in detail. However, this detailed description does not limit further examples to the particular forms described. Further examples may cover all modifications, equivalents, and alternatives falling within the scope of the disclosure. Like numbers refer to like or similar elements throughout the description of the figures, which may be implemented identically or in modified form when compared to one another while providing for the same or a similar functionality.

It will be understood that when an element is referred to as being "connected" or "coupled" to another element, the elements may be directly connected or coupled or via one or more intervening elements. If two elements A and B are combined using an "or", this is to be understood to disclose all possible combinations, i.e. only A, only B as well as A and B. An alternative wording for the same combinations is "at least one of A and B". The same applies for combinations of more than 2 Elements.

The terminology used herein for the purpose of describing particular examples is not intended to be limiting for further examples. Whenever a singular form such as "a," "an" and "the" is used and using only a single element is neither explicitly or implicitly defined as being mandatory, further examples may also use plural elements to implement the same functionality. Likewise, when a functionality is subsequently described as being implemented using multiple elements, further examples may implement the same functionality using a single element or processing entity. It will be further understood that the terms "comprises," "comprising," "includes" and/or "including," when used, specify the presence of the stated features, integers, steps, operations, processes, acts, elements and/or components, but do not preclude the presence or addition of one or more other features, integers, steps, operations, processes, acts, elements, components and/or any group thereof.

Unless otherwise defined, all terms (including technical and scientific terms) are used herein in their ordinary meaning of the art to which the examples belong.

Examples are based on the finding that a throughput of a digital interconnection can be increased by encoding edges/flanks of a clock signal. Examples use a scheme for digitally interconnecting to enable increased throughput, in some example even several multiplications (up to the SNR limit) of the throughput, without any significant power or latency penalty/increase. This is enabled by encoding the information on the time between edges of the clock signal. Examples may offer the ability to triple or quadruple the throughput without adding much power or latency. Examples may be used for interfaces inside a die (between cores/communication interfaces) as well as interfaces between dies for multi-chip solutions or System-On-Chip solutions (SOCs). Given the high data rates that are available in new standards such as Wireless Gigabit alliance (WiGig), 5^{th} Generation (5G), and 802.11ax (Wireless Local Area Network (WLAN) task group ax specification), it is clear that interconnection data rates may need improvement as well as matching to the respective improvements of the wireless standards.

Furthermore, Digital-to-Time Converters (DTCs) and Time-to-Digital Converters (TDCs) are a family of converters designed to encode and decode digital information in the time domain. A DTC can generate a high frequency signal with an edge location that depends on a digital control word. A TDC receives a signal and outputs digital data that describes the timing of the input signal edges. In examples, DTCs and/or TDCs can be used for modulating and demodulating a clock signal.

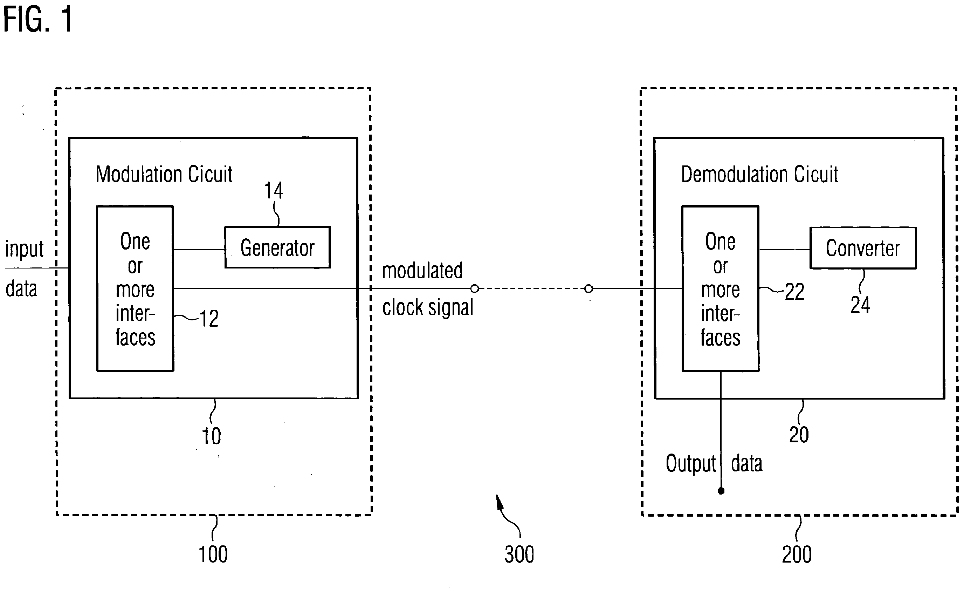

Fig. 1 illustrates examples of a modulation circuit 10, a demodulation circuit 20, a transmitter 100, a receiver 200 and a system 300. Fig. 1 shows a modulation circuit 10, which is configured to provide a modulated clock signal. The modulation circuit 10 comprises one or more interfaces 12 configured to receive input data. The modulation 10 further comprises a generator 14 configured to generate the modulated clock signal based on the input data, wherein a time between two signal edges of the clock signal depends on the input data. The time between two signal edges of the clock signal may be a function of the input data; it may be indicative of the input data. The one or more interfaces 12 are further configured to provide the modulated clock signal. The generator 14 is coupled to the one or more interfaces 12.

Fig. 1 further shows an example of a demodulation circuit 20, which is configured to demodulate output data from a modulated clock signal. The demodulation circuit 20 comprises one or more interfaces 22 configured to receive the modulated clock signal. The demodulation circuit 20 further comprises a converter 24, which is configured to determine the output data based on a time between two signal edges of the modulated clock signal. The one or more interfaces 22 are further configured to provide the output data. The converter 24 is coupled to the one or more interfaces 22.

In examples the one or more interfaces 12, 22, i.e. on the demodulator or modulator side, may correspond to any means for obtaining, receiving, transmitting or providing analog or digital signals, e.g. any connector, contact, pin, register, input port, output port, etc. which allows providing a signal. On the modulator circuit 10 side, the generator 14 may correspond to any means for generating, determining or providing a signal, such as a converter or any means for converting, in some example even a Digital-Signal-Processor (DSP), a Digital-to-Time Converter (DTC as will be detailed subsequently), etc. Likewise, on the demodulation circuit 20 side, the converter 24 may correspond to any means for converting, determining or providing a modulated signal or means for determining data from a modulated signal, such as a demodulator, any means for demodulating, a Time-to-Digital Converter (TDC as will be detailed subsequently), a DSP, any processor, etc. In the following the description will focus on the one or more interfaces 12, 22, the generator 14 and the converter 24 but equally applies to the corresponding means configured for carrying out the respective functions.

In examples, the modulation circuit 10 may as well be a modulation apparatus 10, the demodulation circuit 20 may as well be a demodulation apparatus, etc. The one or more interfaces 12, 22 may correspond to any means for receiving/providing the respective data or signals. The following description will refer to the respective circuits 10, 20 but is equally applicable to the respective apparatuses 10, 20, means, respectively.

In examples signals can be analog or digital. As will be detailed subsequently, a clock signal may be a signal changing between at least two levels, wherein the transitions from one level to another are referred to as edges or flanks. Hence, signals may be discrete with respect to the at least two levels. As will be detailed subsequently the time positions of the edges or flanks will be used to modulated data and therefore their position may change. Hence, signals may be value discrete but time continuous, in order to map the different timings. It is also conceivable to use time discrete signals; however a sampling rate would then be high enough to determine, capture, or gather the different edge/flanks timings. For example, the converter 24 is configured to output a digital signal indicative of or depending on the data.

As further shown in Fig. 1, examples also provide a transmitter 100 comprising an example of the modulation circuit 10 and a receiver 200 comprising an example of the demodulation circuit 20. Examples also provide a system 300 with an example of the transmitter 100 and an example of the receiver 200. Examples for such systems are a chip, a die, a radio frequency circuit, a mobile terminal, a base station transceiver, a mobile communication system etc. In such a system the one or more interfaces 12, 22 may be coupled to each other, e.g. using one or more conductors, lines, bus lines, lanes, etc.

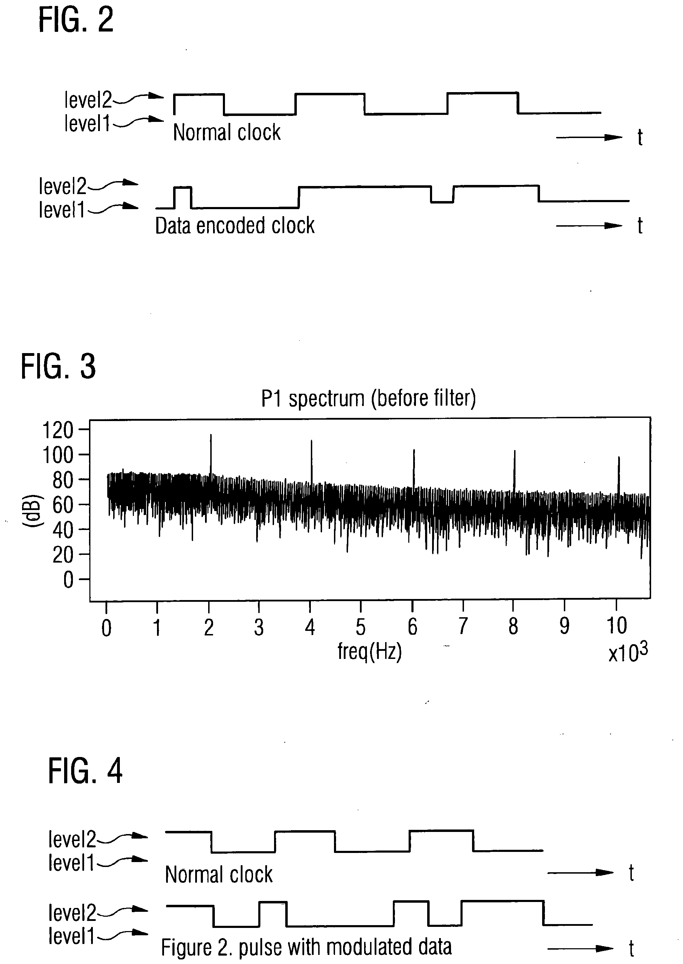

In at least some examples, input data may be received using a digital input data signal, e.g. in terms of binary values such as bits. By modulating the duty-cycle or encoding data on the timing or the edges of the clock signal it is possible to transfer multiple bits per clock cycle, which may also be referred to as duty-cycle modulation. Fig. 2 illustrates a duty-cycle modulated or data encoded clock signal in an example. Both signals depicted in Fig. 2 vary between a first lower level 1 and a second higher level 2 over time t. Signal levels in examples may correspond to voltage or current levels. Fig. 2 shows a regular clock signal at the top, with a duty cycle of 50%, i.e. the pulse width equals half of the period duration. Such signal is also referred to as normal clock signal herein. Fig. 2 shows a data encoded clock signal at the bottom. In this example the rising edges or flanks of the signals are synchronous with the clock signals shown at the top of Fig. 2. The falling edges however, carry the information and hence, the duty cycle varies.

As Fig. 2 indicates, the modulated clock signal may comprise at least a high level, level 2, and a low level, level 1. A rising edge or flank of the modulated clock signal defines a transit of the clock signal from the low level to the high level and a falling edge or flank defines a transit of the modulated clock signal from the high level to the low level. In examples the generator 14 may be configured to modify a timing of at least one of the rising edge or the falling edge depending on or to indicate the input data. Likewise, on the demodulator side the converter 24 may be configured to determine a timing of at least one of the rising edge or the falling edge to determine the output data.

For example, the generator 14 is configured to modulate a duty cycle of the clock signal and the converter 24 is configured to demodulate the duty cycle of the clock signal. As indicated at the bottom of Fig. 2 a clock cycle of the modulated clock signal may comprise a modulated and an unmodulated edge. Examples may provide a constant data rate, multiple bits per sample limited by jitter and Bit-Error-Rate (BER). There might not be any need to transfer the clock location (timing) of the modulated edge (fall/rise) or to use a clock recovery system as it may be sampled by the unmodulated edge.

Although there might not be an immediate need for regenerating the unmodulated clock signal on the receiver 200/demodulator 20 side and implementation of a Phase-Locked-Loop (PLL) circuit may be avoided, some examples may still determine the unmodulated clock signal from the modulated clock signal, be it just to provide it for further signal processing purposes. In some examples, the converter 24 may be configured to determine an unmodulated clock signal from the modulated clock signal. In examples, the unmodulated clock signal might not necessarily be regenerated, however, for example, for the purpose of determining the data it might be done in some examples. A clock may be needed anyhow and in some examples it might be more efficient to regenerate it from the "data" rather than routing a dedicated clock signal. In some examples, the receiver 200 may be configured to use the regenerated clock for RF generation purposes, while the receiver 200 is also configured to detect the data without using the regenerated clock signal. In examples, the clock frequencies on the transmitter 100 and receiver 200 sides may be much lower than the granularity of the timing of the edges/flanks/bits.

This also may also give a high immunity to jitter because rising and falling edges are both generated by the same source and their jitters are highly correlated. Jitter is to be interpreted as a timing variation of an edge or flank, which may be evoked by component tolerances, line capacities, implementation irregularities, component latencies, etc. Depending on the respective implementation a maximum jitter is known and examples may use timing modifications of the signal edges, which can be distinguished from the jitter, for example, timing modifications for data modulation are longer/higher than the jitter, as will be detailed in sequel.

Fig. 3 illustrates a spectrum of a duty-cycle modulated or data encoded clock signal according to Fig. 2 at the bottom. Fig. 3 shows frequency in GHz on the abscissa and power density in dB on the ordinate. The spectrum indicates by the peaks at 2, 4, 6, 8, and 10GHz the spectral power density contribution of the unmodulated edges or flanks while the modulation data energy is wide spread.

In some examples a more efficient time coding scheme may also be referred to as pulse width modulation. Such examples may treat the signal as a series of high and low pulses, where each pulse is modulated and the data is sampled at double the rate (sampling the width of the high pulse by the falling edge and the width of the low pulse by the rising edge). The time difference between the signal transitions (edges/flanks) encodes the data. Fig. 4 illustrates a pulse width modulated or data encoded clock signal in an example. Fig. 4 shows a similar representation as Fig. 2 with a normal clock at the top and pulse width modulated data or data encoded clock signal at the bottom. As can be seen from the signal at the bottom, both signal edges (rising and falling) or flanks are now modulated resulting in a pulse width (or dual edge) modulated clock signal. The system 300 becomes an asynchronous transmission system, as no synchronous reference transitions (edges/flanks) are present in the signal anymore.

In reference to Fig. 1 the generator 14 is in such an example configured to modulate both edges of the modulated clock signal; the converter 24 is configured to demodulate the clock signal based on asynchronous pulses of the modulated clock signal. Asynchronous in this context is to be interpreted as having pulses or pulse cycles which are irregular, i.e. there is no predetermined timing of rising edges, falling edges or pulse width/duration. The modulated clock signal then comprises asynchronous pulses. The generator 14 may be configured to modulate a sequence of at least three edges in the modulated clock signal. In other words, at least three subsequent edges or flanks in the clock signal are modulated, i.e. carry data. Accordingly, the converter 24 is then configured to demodulate a sequence of at least three edges in the modulated clock signal. In further examples, the modulated clock signal comprises a series of high and low pulses, wherein each pulse is modulated.

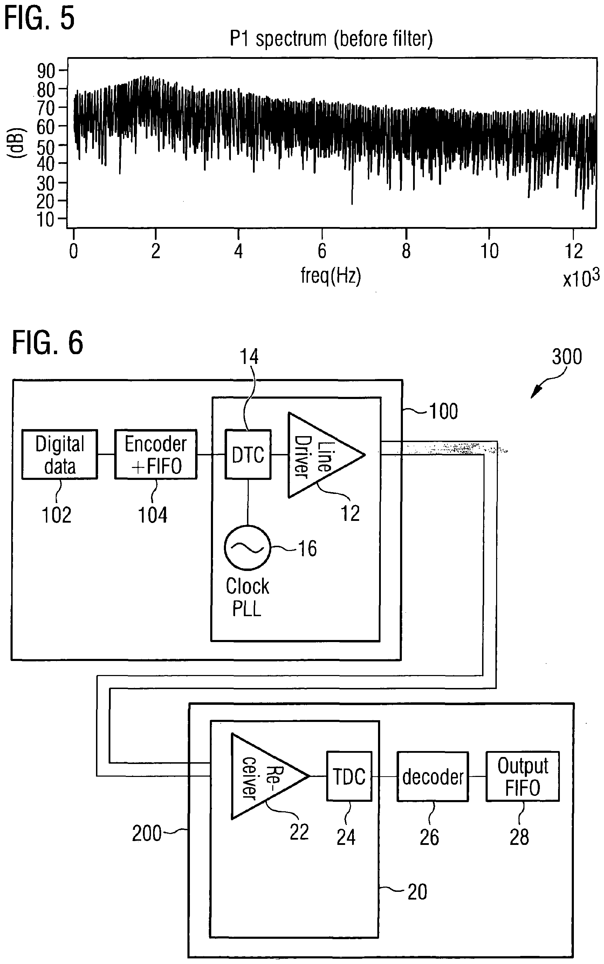

For example, the modulated clock signal carries at least two bits per duty cycle. The converter 24 may be configured to demodulate at least two bits per duty cycle from the modulated clock signal. In effect the data is coded by the time difference between edges, e.g. at least in some examples between any two subsequent edges. Examples may double the data rate for the same power. The data rate may now depend on the data itself. If the data is treated as random an average data rate can be calculated. If the system includes a coding system an average frequency may as well be maintained. Examples may allow higher data rates without increasing the clock rate. Examples may further improve electromagnetic interference or emissions as no constant frequency tone is present in the spectrum as will be shown in Fig. 5. Moreover, jitter may be reduced and there is no need for clock transmission or a clock recovery system (although still an option).

Fig. 5 illustrates a spectrum of a pulse width modulated or data encoded clock signal with dual edge modulation. A similar representation as in Fig. 3 is used for the spectrum. As can be seen, the peaks are reduced and the data is spread. No sharp tones are present in the spectrum, which may also improve electromagnetic emissions.

For example, for a clock rate of 2GHz regular digital data can transfer up to 2bits (sampling on rise and fall) per normal clock and uses at least 2 lines (one for the unmodulated clock signal and one for the data signal) reaching a throughput of 4Gbit/s per data line. If a system with 25ps total cycle jitter and a 2 GHz clock is assumed, architectures with an unmodulated clock have a throughput of 2Gbit/s for using one edge of the clock (single edge) or 4Gbit/s for using both edges (dual edge). In an example assuming 25ps total cycle jitter, the same 2GHz clock can transfer 3 bits per clock by encoding the duty cycle (falling edge only), for example, encoding the values 0 to 7 with duty cycle of 15,25,35...75,85. This ensures 50ps difference between each code to meet the jitter limitation (+/- 25ps between the clock cycles cannot lead to an ambiguity).

As already mentioned above, this interconnection may encode the data on the clock and may save the need to transfer the clock or regenerate it (although some examples might), and achieve a data rate of 6Gbit/s, tripling the data rate compared to the above example (single edge). Under the same jitter condition and clock rate it is possible to modulate the time from rise to fall and from fall to rise. Using the same deltas the difference between edges has a minimum of 75ps and a maximum of 425ps, therefore the cycle time (rise to rise) varies from 150 to 850ps, encoding 3 bits from rise to fall and another 3 bits from fall to rise, i.e. a total of 6 bits, the instantaneous frequency varies significantly, however, for random data the average frequency would be 2GHz and the average data rate would be 12Gbit/s again triple the data rate compared to the above example (dual edge).

Naturally with better jitter it is possible to increase clock frequency or increase the number of bits per cycle and further improve the throughput. Examples may offer a significant increase in data rate limited only by the noise level, by using a digital architecture.

The one or more interfaces 12, 22 on the modulation circuit 10 side and on the demodulation circuit side 20, transmitter 100 and receiver200, respectively, would not have to provide for an extra line or channel for the unmodulated clock signal. The transmitter 100, modulation circuit 10, may receive a digital word and encode it on the pulses or edges that are transmitted on a data line or channel. The transmitter 100 or modulation circuit 10 may be referred to as or comprise a Digital-to-Time Converter (DTC). More specifically, in some examples the generator 14 comprises a DTC or processor configured to convert the clock signal into the modulated clock signal based on the input data. The receiver 200 or demodulation circuit 20 may get the data line as its input and may output the digital word that was encoded on the line. The receiver 200 or demodulation circuit 20 may be referred to as or comprise a Time-to-Digital Converter (TDC). At least in some examples the converter 24 comprises a TDC or a processor.

Fig. 6 shows a block diagram of another example system 300. Fig. 6 shows a transmitter 100 comprising a DTC as generator 14 and a receiver 200 comprising TDC as converter 24 and using asynchronous communication between the transmitter 100 and the receiver 200. As shown in Fig. 6 the transmitter 100 further comprises a digital data source 102, which provides digital data to be transmitted. The digital data is then encoded by an encoder 104, which also comprises a First-In-First-Out shift register (FIFO) providing the input data for the modulation circuit 10. The encoder 104 may, for example, generate encoded data with a predetermined statistical distribution based on the nature of the data provided by the data source 102 such that desired spectrum can be achieved for the modulated signal. The modulation circuit 10 in this example also comprises a clock signal source 16, which is stabilized or controlled by a PLL and which is configured to generate a normal clock signal driving the DTC 14. The one or more interfaces 12 in this example also comprise line drivers for multiple parallel lines connecting to the receiver 200.

The one or more interfaces 22 of the demodulation circuit 20 at the receiver 200 comprise accordingly configured or adapted receivers for the multiple parallel lines. The modulated clock signal is then processed by the TDC 24 before the output data is provided to a decoder 26, which decodes the data according to an encoding rule applied by the encoder 104 on the transmitter 100 side. The receiver 200 further comprises an output FIFO register 28 to provide the data for further processing. The system 300 includes a digital encoder 104 that converts the data to DTC control words, the encoder 104 may also perform pre-distortion of the data to help mitigate Inter-Symbol-Interference (ISI) and line dispersion, it may also include different coding technics to limit bandwidth, maintain the average frequency, or add error correction and detection codes.

The encoder 104 drives the data to the DTC 14 that encodes it on edges from the PLL clock 16 since the DTC 14 rate depends on the data. The encoder 104 may also act as a FIFO buffer. Since the DTC 14 has the ability to change edge positions (in time) it renders the data transmission to be asynchronous. The line driver 12 and the receiver 200 are analog blocks designed to drive the data at the proper amplitudes and restore it at the end of the line, they may also include pre-emphasis (or de-emphasis) circuits. The TDC 14 measures the time difference between successive edges and the decoder 26 converts the data back from TDC outputs to the binary representation. The decoder 26 may also decode any coding scheme that was added such as error correction code. The decoder 26 may also act as a FIFO if it is needed.

A possible implementation for the DTC can be found in US2015049840 A1 and US2015036767 A1.

Other implementations are also possible in examples, for example, with other dividers implementations or with a delay line. A DTC is able to control the edge location in a desired resolution. In some examples there are a minimum size pulse and a maximum size pulse (these will set the frequency of the data) and the number of steps of the pulse size determines the number of bits that can be transferred, which can be limited such that the step size is larger than the jitter to enable noise free decoding in the receiver 200.

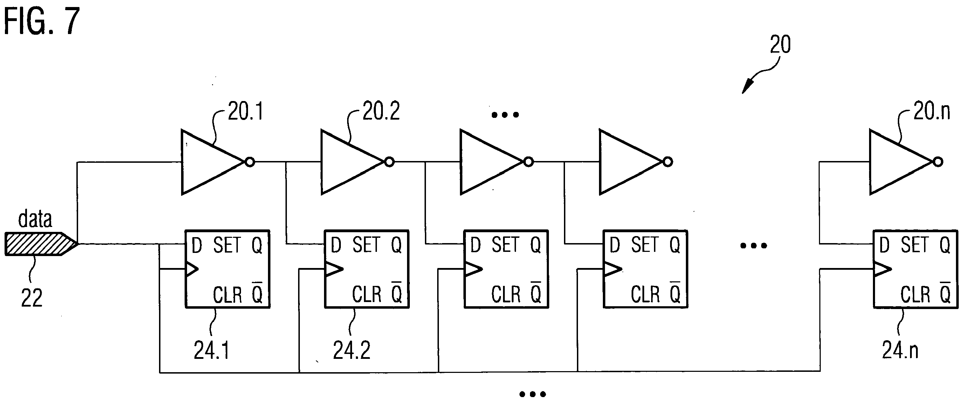

The receiver 200 (TDC) may be a simple TDC 20 with sufficient resolution to distinguish between bits. It can be implemented by a delay line with multiple taps and Flip-Flops (FFs) at each tap. At each edge the FFs may sample the delay line and decode the difference from the last edge. Fig. 7 shows an implementation of a receiver 200 comprising a demodulation circuit 20 implemented as TDC in an example. The modulated clock signal is input as data on the very left into the interface 22. The receiver (TDC) 20 may be a simple TDC with sufficient resolution to distinguish between bits.

The demodulation circuit 20 comprises a series of delay elements 20.1, 20.2,..., 20.n, n indicates the resolution or time granularity (e.g. 10ps delay lines), and a number of D-flip-flops 24.1, 24.2, ...24.n. The modulated clock signal is coupled parallel to all clock inputs of the D-flip-flops, such that an edge in the modulated clock signal triggers the transfer of the respective data input to the output of the flip-flop. As can be seen in Fig. 7 the input signal is directly coupled to the data input of the first flip-flop 24.1, via the first delay element 20.1 to the input of the second flip-flop 24.2 and so on. Hence, the pulse width determines how many flip-flops are set and their respective output represents a bit sequence indicating the pulse width. For example, if delay elements of 5 times 10ps are used eight times, eight delays can be distinguished or a three bit value can be used. Other implementations are possible too such as Vernier implementation etc.)

For example a total jitter of 25ps is assumed and a minimum pulse width of 75ps, 3 bits (0-7) would create pulses of 75- 425ps, combining 2 pulses (low and high) would create a cycle time of 150-850ps on average the cycle time would be 500ps, resulting in a total data rate of 12Gbit/sec. Improving the jitter to 12.5ps would enable to add 2bits to get a 16 Gbit/s. If the average frequency would be increased to 3GHz and a total rate of 18Gbit/s could obtained. With the first option power consumption may stay the same, with the second option there is an increase in power but also another improvement in performance.

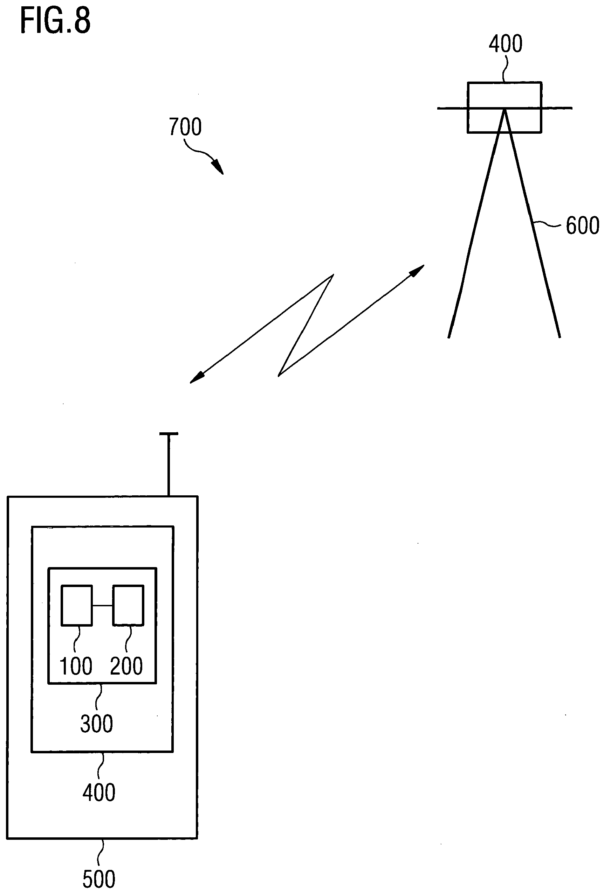

Fig. 8 depicts examples of a transmitter 100, a receiver 200, a system 300, a radio transceiver 400, a mobile terminal 500, a base station transceiver 600 and a mobile communication system 700. As shown an example of a mobile terminal 500 may comprise an example of a radio transceiver 400, which may comprise an example of a system 300 with a transmitter 100 and a receiver 200 as described above. For example, the system 300 may be implemented in a base-band processing chip of the radio transceiver 400. Likewise, the example of the base station transceiver 600 may also comprise an example of a radio transceiver 400 in line with the above. A further example is a mobile communication system 700 comprising an example of the mobile transceiver 500 and/or an example of the base station transceiver 600.

The mobile communication system 700 may correspond, for example, to one of the Third Generation Partnership Project (3GPP)-standardized mobile communication networks, where the term mobile communication system is used synonymously to mobile communication network. The mobile or wireless communication system may correspond to a mobile communication system of the 5th Generation (5G) and may use mm-Wave technology. The mobile communication system may correspond to or comprise, for example, a Long-Term Evolution (LTE), an LTE-Advanced (LTE-A), High Speed Packet Access (HSPA), a Universal Mobile Telecommunication System (UMTS) or a UMTS Terrestrial Radio Access Network (UTRAN), an evolved-UTRAN (e-UTRAN), a Global System for Mobile communication (GSM) or Enhanced Data rates for GSM Evolution (EDGE) network, a GSM/EDGE Radio Access Network (GERAN), or mobile communication networks with different standards, for example, a Worldwide Inter-operability for Microwave Access (WIMAX) network IEEE 802.16 or Wireless Local Area Network (WLAN) IEEE 802.11, generally an Orthogonal Frequency Division Multiple Access (OFDMA) network, a Time Division Multiple Access (TDMA) network, a Code Division Multiple Access (CDMA) network, a Wideband-CDMA (WCDMA) network, a Frequency Division Multiple Access (FDMA) network, a Spatial Division Multiple Access (SDMA) network, etc.

A base station or base station transceiver 600 may be operable or configured to communicate with one or more active mobile transceivers 500. A base station transceiver 600 can be located in or adjacent to a coverage area of another base station transceiver, e.g. a macro cell base station transceiver or small cell base station transceiver. Hence, examples may provide a mobile communication system 700 comprising one or more mobile transceivers 500 and one or more base station transceivers 600, wherein the base station transceivers 600 may establish macro cells or small cells, as e.g. pico-, metro-, or femto cells. A mobile transceiver or terminal 500 may correspond to a smartphone, a cell phone, User Equipment (UE), a laptop, a notebook, a personal computer, a Personal Digital Assistant (PDA), a Universal Serial Bus (USB) -stick, a car, etc. A mobile transceiver may also be referred to as UE or mobile in line with the 3GPP terminology.

A base station transceiver 600 can be located in the fixed or stationary part of the network or system 700. A base station transceiver 600 may correspond to a remote radio head, a transmission point, a relay station, an access point, a macro cell, a small cell, a micro cell, a femto cell, a metro cell etc. A base station transceiver 600 can be a wireless interface of a wired network, which enables transmission of radio signals to a UE or mobile transceiver. Such a radio signal may comply with radio signals as, for example, standardized by 3GPP or, generally, in line with one or more of the above listed systems. Thus, a base station transceiver may correspond to a NodeB, an eNodeB, a Base Transceiver Station (BTS), an access point, a remote radio head, a transmission point, a relay station etc., which may be further subdivided in a remote unit and a central unit.

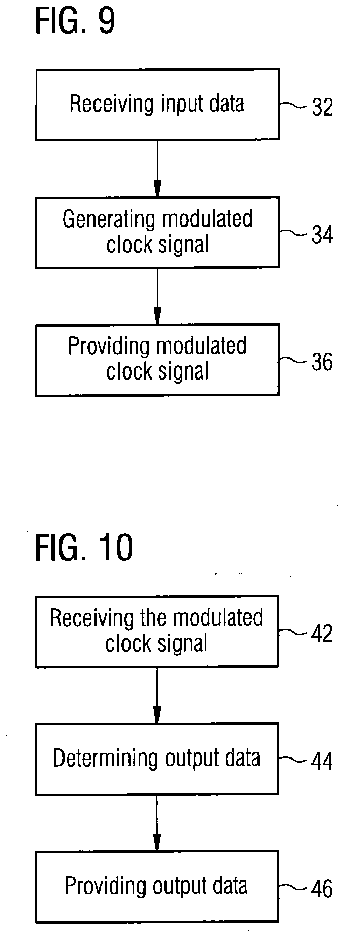

Fig. 9 depicts a block diagram of an example of a method for providing a modulated clock signal. The method comprises receiving 32 input data and generating 34 the modulated clock signal based on the input data. A time between two signal edges of the clock signal is indicative of or depends on the input data. The method further comprises providing 36 the modulated clock signal.

Fig. 10 depicts a block diagram of an example of a method for demodulating a modulated clock signal. The method comprises receiving 42 the modulated clock signal and determining 44 the output data based on a time between two signal edges of the modulated clock signal. The method further comprises providing 46 the output data.

Another example is a computer program having a program code for performing at least one of the methods described herein, when the computer program is executed on a computer, a processor, or a programmable hardware component. Another example is a machine readable storage including machine readable instructions, when executed, to implement a method or realize an apparatus as described herein. A further example is a machine readable medium including code, when executed, to cause a machine to perform any of the methods described herein. For example, the final determination or evaluation of a decoded signal (incl. potential error correction) of the data based on the "raw" TDC 24 results may also be a computer program based method.

The examples as described herein may be summarized as follows:
Example 1 is a modulation circuit (10) configured to provide a modulated clock signal. The modulation circuit (10) comprises one or more interfaces (12) configured to receive input data; and a generator (14) configured to generate the modulated clock signal based on the input data, wherein a time between two signal edges of the clock signal depends on or is indicative of the input data, wherein the one or more interfaces (12) are further configured to provide the modulated clock signal.
Example 2 is the modulation circuit (10) of example 1, wherein the input data is received using a digital input data signal.
Example 3 is the modulation circuit (10) of one of the examples 1 or 2, wherein the modulated clock signal comprises at least a high level and a low level, wherein a rising edge of the modulated clock signal defines a transit of the clock signal from the low level to the high level and wherein a falling edge defines a transit of the modulated clock signal from the high level to the low level, wherein the generator (14) is configured to modify a timing of at least one of the rising edge or the falling edge depending on the input data.
Example 4 is the modulation circuit (10) of one of the examples 1 to 3, wherein the generator (14) is configured to modulate a duty cycle of the clock signal, or wherein a clock cycle of the modulated clock signal comprises a modulated and an unmodulated edge.
Example 5 is the modulation circuit (10) of one of the examples 1 to 3, wherein the generator (14) is configured to modulate both edges of the modulated clock signal.
Example 6 is the modulation circuit (10) of one of the examples 1 or 2, wherein the generator (14) is configured to modulate a sequence of at least three edges in the modulated clock signal.
Example 7 is the modulation circuit (10) of one of the examples 1 to 6, wherein the modulated clock signal carries at least two bits per duty cycle.
Example 8 is the modulation circuit (10) of one of the examples 5 to 7, wherein the modulated clock signal comprises asynchronous pulses.
Example 9 is the modulation circuit (10) of one of the examples 5 to 8, wherein the modulated clock signal comprises a series of high and low pulses, wherein each pulse is modulated.
Example 10 is the modulation circuit (10) of one of the examples 1 to 9, wherein the generator (14) comprises a digital-to-time-converter or processor configured to convert the clock signal into the modulated clock signal based on the input data.
Example 11 is a demodulation circuit (20) configured to demodulate output data from a modulated clock signal. The demodulation circuit (20) comprises one or more interfaces (22) configured to receive the modulated clock signal; and a converter (24) configured to determine the output data based on a time between two signal edges of the modulated clock signal, wherein the one or more interfaces (22) are further configured to provide the output data.
Example 12 is the demodulation circuit (20) of example 11, wherein the modulated clock signal comprises at least a high level and a low level, wherein a rising edge of the modulated clock signal defines a transit of the clock signal from the low level to the high level and wherein a falling edge defines a transit of the clock signal from the high level to the low level, wherein the converter (24) is configured to determine a timing of at least one of the rising edge or the falling edge to determine the output data.
Example 13 is the demodulation circuit (20) of one of the examples 11 or 12, wherein the converter (24) is configured to demodulate a duty cycle of the clock signal.
Example 14 is the demodulation circuit (20) of one of the examples 11 to 13, wherein the converter (24) is configured to demodulate the clock signal based on asynchronous pulses of the modulated clock signal.
Example 15 is the demodulation circuit (20) of one of the examples 11 to 14, wherein the converter (24) is configured to demodulate a sequence of at least three edges in the modulated clock signal.
Example 16 is the demodulation circuit (20) of one of the examples 11 to 15, wherein the modulated clock signal carries at least two bits per duty cycle, and wherein the converter (24) is configured to demodulate at least two bits per duty cycle from the modulated clock signal.
Example 17 is the demodulation circuit (20) of one of the examples 11 to 16, wherein a clock cycle of the modulated clock signal comprises a modulated and an unmodulated edge, or wherein the modulated clock signal comprises a series of high and low pulses, wherein each pulse is modulated.
Example 18 is the demodulation circuit (20) of one of the examples 11 to 17, wherein the converter (24) is configured to output a digital signal depending on the data.
Example 19 is the demodulation circuit (20) of one of the examples 11 to 18, wherein the converter (24) comprises a time-to-digital converter or a processor.
Example 20 is the demodulation circuit (20) of one of the examples 11 to 19, wherein the converter (24) is configured to determine an unmodulated clock signal from the modulated clock signal.
Example 21 is a modulation apparatus (10) for providing a modulated clock signal. The modulation apparatus (10) comprises means for receiving (12) input data; and means for generating (14) the modulated clock signal based on the input data, wherein a time between two signal edges of the clock signal depends on the input data, wherein the means for receiving (12) is further configured for providing the modulated clock signal.
Example 22 is the modulation apparatus (10) of example 21, wherein the input data is received using a digital input data signal.
Example 23 is the modulation apparatus (10) of one of the examples 21 or 22, wherein the modulated clock signal comprises at least a high level and a low level, wherein a rising edge of the modulated clock signal defines a transit of the clock signal from the low level to the high level and wherein a falling edge defines a transit of the modulated clock signal from the high level to the low level, wherein the means for generating (14) is configured for modifying a timing of at least one of the rising edge or the falling edge depending on the input data.
Example 24 is the modulation apparatus (10) of one of the examples 21 to 23, wherein the means for generating (14) is configured for modulating a duty cycle of the clock signal, or wherein a clock cycle of the modulated clock signal comprises a modulated and an unmodulated edge.
Example 25 is the modulation apparatus (10) of one of the examples 21 to 23, wherein the means for generating (14) is configured for modulating both edges of the modulated clock signal.
Example 26 is the modulation apparatus (10) of one of the examples 21 or 22, wherein the means for generating (14) is configured for modulating a sequence of at least three edges in the modulated clock signal.
Example 27 is the modulation apparatus (10) of one of the examples 21 to 26, wherein the modulated clock signal carries at least two bits per duty cycle.
Example 28 is the modulation apparatus (10) of one of the examples 25 to 27, wherein the modulated clock signal comprises asynchronous pulses.
Example 29 is the modulation apparatus (10) of one of the examples 25 to 28, wherein the modulated clock signal comprises a series of high and low pulses, wherein each pulse is modulated.
Example 30 is the modulation apparatus (10) of one of the examples 21 to 29, wherein the means for generating (14) comprises a digital-to-time-converter or processor configured for converting the clock signal into the modulated clock signal based on the input data.
Example 31 is a demodulation apparatus (20) for demodulating output data from a modulated clock signal. The demodulation apparatus (20) comprises means for receiving (22) the modulated clock signal; and means for determining (24) the output data based on a time between two signal edges of the modulated clock signal, wherein the means for receiving (22) is further configured for providing the output data.
Example 32 is the demodulation apparatus (20) of example 31, wherein the modulated clock signal comprises at least a high level and a low level, wherein a rising edge of the modulated clock signal defines a transit of the clock signal from the low level to the high level and wherein a falling edge defines a transit of the clock signal from the high level to the low level, wherein the means for determining (24) is configured for determining a timing of at least one of the rising edge or the falling edge to determine the output data.
Example 33 is the demodulation apparatus (20) of one of the examples 31 or 32, wherein the means for determining (24) is configured for demodulating a duty cycle of the clock signal.
Example 34 is the demodulation apparatus (20) of one of the examples 31 to 33, wherein the means for determining (24) is configured for demodulating the clock signal based on asynchronous pulses of the modulated clock signal.
Example 35 is the demodulation apparatus (20) of one of the examples 31 to 34, wherein the means for determining (24) is configured for demodulating a sequence of at least three edges in the modulated clock signal.
Example 36 is the demodulation apparatus (20) of one of the examples 31 to 35, wherein the modulated clock signal carries at least two bits per duty cycle, and wherein the means for determining (24) is configured for demodulating at least two bits per duty cycle from the modulated clock signal.
Example 37 is the demodulation apparatus (20) of one of the examples 31 to 36, wherein a clock cycle of the modulated clock signal comprises a modulated and an unmodulated edge, or wherein the modulated clock signal comprises a series of high and low pulses, wherein each pulse is modulated.
Example 38 is the demodulation apparatus (20) of one of the examples 31 to 37, wherein the means for determining (24) is configured for outputting a digital signal depending on the data.
Example 39 is the demodulation apparatus (20) of one of the examples 31 to 38, wherein the means for determining (24) comprises a time-to-digital converter or a processor.
Example 40 is the demodulation apparatus (20) of one of the examples 31 to 39, wherein the means for determining (24) is configured determining an unmodulated clock signal from the modulated clock signal.
Example 41 is a transmitter (100) configured to provide digital data to receiver (200), the transmitter (100) comprising the modulation circuit (10) of one of the examples 1 to 10 or a modulation apparatus (10) of one of the examples 21 to 30.
Example 42 is a receiver (200) configured to obtain digital data from a transmitter (100), the receiver (200) comprising the demodulation circuit (20) of one of the examples 11 to 20 or a demodulation apparatus (20) of one of the examples 31 to 40.
Example 43 is a system (300) comprising the transmitter (100) of example 41 and the receiver (200) of example 42.
Example 44 is the system (300) of example 43 using asynchronous communication between the transmitter (100) and the receiver (300).
Example 45 is a radio frequency circuit (400) comprising the system (300) of one of the examples 43 or 44.
Example 46 is a mobile terminal (500) comprising the radio frequency circuit (500) of example 45.
Example 47 is a method for providing a modulated clock signal. The method comprising receiving (32) input data; generating (34) the modulated clock signal based on the input data, wherein a time between two signal edges of the clock signal depends on the input data; and providing (36) the modulated clock signal.
Example 48 is the method of example 47, wherein the input data is received using a digital input data signal.
Example 49 is the method of one of the examples 47 or 48, wherein the modulated clock signal comprises at least a high level and a low level, wherein a rising edge of the modulated clock signal defines a transit of the clock signal from the low level to the high level and wherein a falling edge defines a transit of the modulated clock signal from the high level to the low level, further comprising modifying a timing of at least one of the rising edge or the falling edge depending on the input data.
Example 50 is the method of one of the examples 47 to 49, comprising modulating a duty cycle of the clock signal, or wherein a clock cycle of the modulated clock signal comprises a modulated and an unmodulated edge.
Example 51 is the method of one of the examples 47 to 50, comprising modulating both edges of the modulated clock signal.
Example 52 is the method of one of the examples 47 or 48, comprising modulating a sequence of at least three edges in the modulated clock signal.
Example 53 is the method of one of the examples 47 to 52, wherein the modulated clock signal carries at least two bits per duty cycle.
Example 54 is the method of one of the examples 51 to 53, wherein the modulated clock signal comprises asynchronous pulses.
Example 55 is the method of one of the examples 51 to 54, wherein the modulated clock signal comprises a series of high and low pulses, wherein each pulse is modulated.
Example 56 is the method of one of the examples 47 to 55, comprising converting the clock signal into the modulated clock signal based on the input data.
Example 57 is a method for demodulating output data from a modulated clock signal. The method comprises receiving (42) the modulated clock signal; determining (44) the output data based on a time between two signal edges of the modulated clock signal; and providing (46) the output data.
Example 58 is the method of example 57, wherein the modulated clock signal comprises at least a high level and a low level, wherein a rising edge of the modulated clock signal defines a transit of the clock signal from the low level to the high level and wherein a falling edge defines a transit of the clock signal from the high level to the low level, further comprising determining a timing of at least one of the rising edge or the falling edge to determine the output data.
Example 59 is the method of one of the examples 57 or 58, comprising demodulating a duty cycle of the clock signal.
Example 60 is the method of one of the examples 57 to 59, comprising demodulating the clock signal based on asynchronous pulses of the modulated clock signal.
Example 61 is the method of one of the examples 57 to 60, comprising demodulating a sequence of at least three edges in the modulated clock signal.
Example 62 is the method of one of the examples 57 to 61, wherein the modulated clock signal carries at least two bits per duty cycle, and comprising demodulating at least two bits per duty cycle from the modulated clock signal.
Example 63 is the method of one of the examples 57 to 62, wherein a clock cycle of the modulated clock signal comprises a modulated and an unmodulated edge, or wherein the modulated clock signal comprises a series of high and low pulses, wherein each pulse is modulated.
Example 64 is the method of one of the examples 57 to 63, comprising outputting a digital signal depending on the data.
Example 65 is the method of one of the examples 57 to 64, comprising determining an unmodulated clock signal from the modulated clock signal.
Example 66 is a method for a radio transceiver comprising the method of one of the examples 47 to 65.
Example 67 is a method for a mobile terminal (500) comprising the method of example 66.
Example 68 is a computer program having a program code for performing the method of at least one of the examples 47 to 67, when the computer program is executed on a computer, a processor, or a programmable hardware component.
Example 69 is a machine readable storage including machine readable instructions, when executed, to implement a method or realize an apparatus as exemplified in any of the above examples.
Example 70 is a machine readable medium including code, when executed, to cause a machine to perform the method of any one of examples 47 to 67.

The aspects and features mentioned and described together with one or more of the previously detailed examples and figures, may as well be combined with one or more of the other examples in order to replace a like feature of the other example or in order to additionally introduce the feature to the other example.

Examples may further be or relate to a computer program having a program code for performing one or more of the above methods, when the computer program is executed on a computer or processor. Steps, operations or processes of various above-described methods may be performed by programmed computers or processors. Examples may also cover program storage devices such as digital data storage media, which are machine, processor or computer readable and encode machine-executable, processor-executable or computer-executable programs of instructions. The instructions perform or cause performing some or all of the acts of the above-described methods. The program storage devices may comprise or be, for instance, digital memories, magnetic storage media such as magnetic disks and magnetic tapes, hard drives, or optically readable digital data storage media. Further examples may also cover computers, processors or control units programmed to perform the acts of the above-described methods or (field) programmable logic arrays ((F)PLAs) or (field) programmable gate arrays ((F)PGAs), programmed to perform the acts of the above-described methods.

The description and drawings merely illustrate the principles of the disclosure. Furthermore, all examples recited herein are principally intended expressly to be only for pedagogical purposes to aid the reader in understanding the principles of the disclosure and the concepts contributed by the inventor(s) to furthering the art. All statements herein reciting principles, aspects, and examples of the disclosure, as well as specific examples thereof, are intended to encompass equivalents thereof.

A functional block denoted as "means for ..." performing a certain function may refer to a circuit that is configured to perform a certain function. Hence, a "means for s.th." may be implemented as a "means configured to or suited for s.th.", such as a device or a circuit configured to or suited for the respective task.

Functions of various elements shown in the figures, including any functional blocks labeled as "means", "means for providing a sensor signal", "means for generating a transmit signal.", etc., may be implemented in the form of dedicated hardware, such as "a signal provider", "a signal processing unit", "a processor", "a controller", etc. as well as hardware capable of executing software in association with appropriate software. When provided by a processor, the functions may be provided by a single dedicated processor, by a single shared processor, or by a plurality of individual processors, some of which or all of which may be shared. However, the term "processor" or "controller" is by far not limited to hardware exclusively capable of executing software, but may include digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included.

A block diagram may, for instance, illustrate a high-level circuit diagram implementing the principles of the disclosure. Similarly, a flow chart, a flow diagram, a state transition diagram, a pseudo code, and the like may represent various processes, operations or steps, which may, for instance, be substantially represented in computer readable medium and so executed by a computer or processor, whether or not such computer or processor is explicitly shown. Methods disclosed in the specification or in the claims may be implemented by a device having means for performing each of the respective acts of these methods.

It is to be understood that the disclosure of multiple acts, processes, operations, steps or functions disclosed in the specification or claims may not be construed as to be within the specific order, unless explicitly or implicitly stated otherwise, for instance for technical reasons. Therefore, the disclosure of multiple acts or functions will not limit these to a particular order unless such acts or functions are not interchangeable for technical reasons. Furthermore, in some examples a single act, function, process, operation or step may include or may be broken into multiple sub-acts, -functions, -processes, -operations or -steps, respectively. Such sub acts may be included and part of the disclosure of this single act unless explicitly excluded.

Furthermore, the following claims are hereby incorporated into the detailed description, where each claim may stand on its own as a separate example. While each claim may stand on its own as a separate example, it is to be noted that - although a dependent claim may refer in the claims to a specific combination with one or more other claims - other examples may also include a combination of the dependent claim with the subject matter of each other dependent or independent claim. Such combinations are explicitly proposed herein unless it is stated that a specific combination is not intended. Furthermore, it is intended to include also features of a claim to any other independent claim even if this claim is not directly made dependent to the independent claim.

## Claims

1. A modulation apparatus (10) for providing a modulated clock signal, the modulation apparatus (10) comprising
means for receiving (12) input data; and
means for generating (14) the modulated clock signal based on the input data, wherein a time between two signal edges of the clock signal depends on the input data,
wherein the means for receiving (12) is further configured for providing the modulated clock signal.

2. The modulation apparatus (10) of claim 1, wherein the input data is received using a digital input data signal.

3. The modulation apparatus (10) of one of the claims 1 or 2, wherein the modulated clock signal comprises at least a high level and a low level, wherein a rising edge of the modulated clock signal defines a transit of the clock signal from the low level to the high level and wherein a falling edge defines a transit of the modulated clock signal from the high level to the low level, wherein the means for generating (14) is configured for modifying a timing of at least one of the rising edge or the falling edge depending on the input data.

4. The modulation apparatus (10) of one of the claims 1 to 3, wherein the means for generating (14) is configured for modulating a duty cycle of the clock signal, or wherein a clock cycle of the modulated clock signal comprises a modulated and an unmodulated edge.

5. A demodulation apparatus (20) for demodulating output data from a modulated clock signal, the demodulation apparatus (20) comprising
means for receiving (22) the modulated clock signal; and
means for determining (24) the output data based on a time between two signal edges of the modulated clock signal,
wherein the means for receiving (22) is further configured for providing the output data.

6. The demodulation apparatus (20) of claim 5, wherein the modulated clock signal comprises at least a high level and a low level, wherein a rising edge of the modulated clock signal defines a transit of the clock signal from the low level to the high level and wherein a falling edge defines a transit of the clock signal from the high level to the low level, wherein the means for determining (24) is configured for determining a timing of at least one of the rising edge or the falling edge to determine the output data.

7. The demodulation apparatus (20) of one of the claims 5 or 6, wherein the means for determining (24) is configured for demodulating a duty cycle of the clock signal.

8. The demodulation apparatus (20) of one of the claims 5 to 7, wherein the means for determining (24) is configured for demodulating the clock signal based on asynchronous pulses of the modulated clock signal.

9. A transmitter (100) configured to provide digital data to receiver (200), the transmitter (100) comprising the modulation apparatus (10) of one of the claims 1 to 4.

10. A receiver (200) configured to obtain digital data from a transmitter (100), the receiver (200) comprising the demodulation apparatus (20) of one of the claims 5 to 8.

11. A system (300) comprising the transmitter (100) of claim 9 and the receiver (200) of claim 10.

12. A radio frequency circuit (400) comprising the system (300) of claim 11.

13. A method for providing a modulated clock signal, the method comprising receiving (32) input data;
generating (34) the modulated clock signal based on the input data, wherein a time between two signal edges of the clock signal depends on the input data; and providing (36) the modulated clock signal.

14. A method for demodulating output data from a modulated clock signal, the method comprising
receiving (42) the modulated clock signal;
determining (44) the output data based on a time between two signal edges of the modulated clock signal; and
providing (46) the output data.

15. A computer program having a program code for performing the method of at least one of the claims 13 or 14, when the computer program is executed on a computer, a processor, or a programmable hardware component.
